# EUROPEAN PATENT APPLICATION

(11) **EP 4 170 576 A1**
(43) Date of publication of application: **26.04.2023**
(21) Application number: 21826427.3
(22) Date of filing: 14.06.2021
(51) Int. Cl.: G06Q 50/08, G06Q 50/10, G08B 25/12, G08B 21/02, H04W 4/80, H04W 4/021, G01S 1/68, G01S 19/13

(54) **ONSITE SAFETY MANAGEMENT SYSTEM AND DEVICE**

(30) Priority: 19.06.2020 KR 20200074655
(71) Applicant: EHI, Suwon-si, Gyeonggi-do 16227 (KR)
(72) Inventor: OH, Seung Jin, Suwon-si, Gyeonggi-do 16513 (KR); KIM, Sang Uk, Suwon-si, Gyeonggi-do 16253 (KR)
(74) Representative: AWA Sweden AB
(86) International application number: PCT/KR2021/007387
(87) International publication number: WO 2021/256799

(57) **Abstract**

Disclosed are an onsite safety management system and device, and the system includes a portable device including a first body and a second body attachable to and detachable from the first body, at least one electronic device receiving a rescue request signal transmitted, when the first and second bodies are detached from each other, by the portable device, and a management apparatus identifying a current location including an altitude based on the rescue request signal received from the at least one electronic device and displaying the current location on map data of a site, and other embodiments are also applicable.

## Description

### [Technical Field]

The present invention relates to an onsite safety management system and device.

### [Background Art]

A construction work site, as a place where a lot of workers are exposed to risk factors such as fire or falls during work, has to provide a management system that is capable of guaranteeing the safety of the workers. To this end, currently, closed circuit televisions (CCTVs) are installed in specific areas of the site to monitor the presence of danger and the status of work and notify workers of danger through a warning broadcast system.

However, the warning broadcast system has drawbacks in that the workers exposed to dangerous situations may not correctly recognize the warning because of the noise caused by work and that the system is likely to fail to sense dangers in the blind spots of the CCTVs.

As a method for solving this problem, there is Korean Patent Registration No. 0779727. Korean Patent Registration No. 0779727 relates to a system for managing dangerous areas around work machines and preventing safety accidents in workplaces using radio frequency identification (RFID) tags attached to workers' safety helmets.

However, such a system has the hassle of installing receivers capable of receiving RFID signals in many places on the site to check the locations of workers and also has the drawback of making it difficult to check the accidents occurring to workers in real time so as to immediately deal with the accident.

### [DISCLOSURE]

### [Technical Problem]

In order to solve the above problems, embodiments of the present invention provide an onsite safety management system and device that is capable of quickly dealing with any accident occurred to a worker in such a way of allowing a manager, when a rescue request signal is transmitted from a portable device, to locate the position of the worker using the sensing data received from at least one of the portable device and other electronic devices capable of sensing the current location of the worker at a specific altitude.

Also, the embodiments of the present invention provide an onsite safety management system and device that is capable of minimizing the installation of receivers for receiving a rescue request signal in a construction site in such a way of allowing a manager, when the rescue request signal, to receive the rescue request signal from the electronic devices carried by other workers located nearby.

### [Technical Solution]

A site safety management system according to an embodiment of the present invention includes a first body and a second body attachable to and detachable from the first body, at least one electronic device receiving a rescue request signal transmitted, when the first and second bodies are detached from each other, from the portable device; and a management apparatus identifying a current location including an altitude based on the rescue request signal received from the at least one electronic device and displaying the current location on map data of a site.

Also, the at least one electronic device includes a barometric pressure sensor acquiring atmospheric pressure data related to the altitude of the current location and a position tracking sensor acquiring location data related to the current location.

Also, a first electronic device among the at least one electronic device activates, when receiving the rescue request signal, at least one of a camera and a microphone provided in the first electronic device to acquire environmental data.

Also, at least one second electronic devices except the first electronic device to which the portable device is registered to among the at least one electronic device activates, when receiving the rescue request signal, at least one of a camera and a microphone provided in the second electronic device to acquire environmental data.

Also, the management apparatus outputs, when receiving the rescue request signal from the at least one electronic device, an alarm and transmits the rescue request signal to a prestored contact.

Also, the management apparatus downloads the environmental data received from the first electronic device and outputs the environmental data.

Also, the management apparatus transmits a message related to the rescue request signal to the at least one electronic device located within a critical radius based on the current location.

Also, the portable device includes a barometric pressure sensor acquiring atmospheric pressure data related to the altitude of the current location and a position tracking sensor acquiring location data related to the current location.

In addition, a site safety management apparatus according to an embodiment includes a communication unit communicating with at least one electronic device receiving a rescue request signal transmitted by a portable device that transmits the rescue request signal when a first body and a second body of the portable device are detached from each other, a control unit identifying current location including an altitude based on communication with the at least one electronic device, and a display unit displaying the identified current location on map data of a site.

Also, the control unit identifies the current location based on atmospheric pressure data related to the altitude of the current location and location data related to the current location that are respectively acquired from a barometric pressure sensor and a position tracking sensor provided in the at least one electronic device.

Also, the control unit receives and identifies, when receiving the rescue request signal from the first electronic device to which the portable device is registered, environmental data acquired from at least one of a camera and a microphone provided in the first electronic device.

Also, the control unit receives and identifies, when receiving the rescue request signal from at least one second electronic device except the first electronic device, the environmental data acquired at the second electronic device.

Also, the control unit transmits, when receiving the rescue request signal, the rescue request signal to a prestored contact.

Also, the control unit transmits a message related to the rescue request signal to the at least one electronic device located within a critical radius based on the current location.

Also, the control unit identifies the current location based on atmospheric pressure data related to the altitude of the current location and location data related to the current location that are respectively acquired from a barometric pressure sensor and a position tracking sensor provided in the portable device.

### [Advantageous Effect]

As described above, the onsite safety management system and device of the present invention is advantageous in terms of quickly dealing with any accident occurred to a worker in such a way of allowing a manager, when a rescue request signal is transmitted from a portable device, to locate the position of the worker using the sensing data received from at least one of the portable device and other electronic devices capable of sensing the current location of the worker at a specific altitude.

Also, the onsite safety management system and device of the present invention is advantageous in terms of minimizing the installation of receivers for receiving a rescue request signal in a construction site in such a way of allowing a manager, when the rescue request signal, to receive the rescue request signal from the electronic devices carried by other workers located nearby.

### [Description of Drawings]

FIG. 1 is a diagram illustrating a construction site safety management system according to an embodiment of the present invention;
FIG. 2 is a diagram illustrating a construction site safety management apparatus according to an embodiment of the present invention;
FIG. 3 is signal flow diagram illustrating a construction site safety management method according to an embodiment of the present invention;
FIG. 4 is a flowchart illustrating a method for performing construction site management in a management apparatus according to an embodiment of the present invention;
FIGs. 5 to 8 diagrams illustrating exemplary screen displays of a management apparatus according to an embodiment of the present invention; and
FIG. 9 is signal flow diagram illustrating a construction site safety management method according to another embodiment of the present invention.

### [Mode for Invention]

Hereinafter, preferred embodiments of the present invention will be described in detail with reference to the accompanying drawings. The detailed description set forth below in conjunction with the accompanying drawings is intended to describe exemplary embodiments of the present invention and is not intended to represent the only embodiments in which the present invention may be practiced. In order to clearly describe the present invention, parts irrelevant to the description may be omitted in the drawings, and the same reference numerals may be used for the same or similar components throughout the specification.

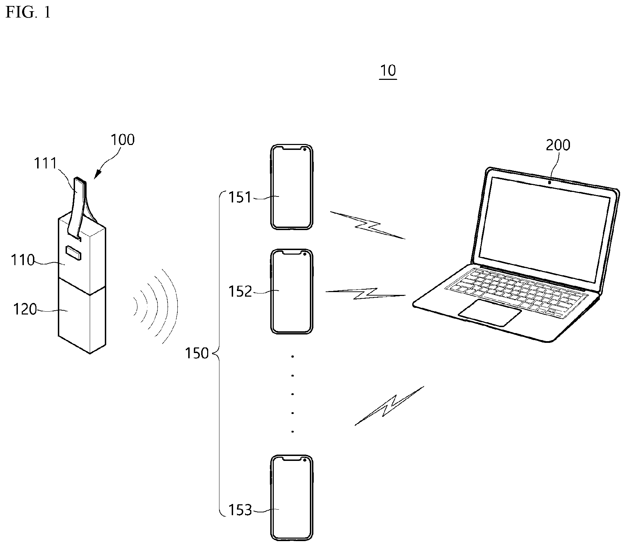

FIG. 1 is a diagram illustrating a construction site safety management system according to an embodiment of the present invention.

With reference to FIG. 1, a system 10 according to the present invention may include a portable device 100, a plurality of electronic devices 150 and a management apparatus 200.

The portable device 100 includes a processor (not shown), and the processor of the portable device 100 controls a beacon communication module (not shown) to communicate with the electronic devices 150 through beacon communication. The processor of the portable device 100 controls the beacon communication module to continuously transmit a beacon signal. The portable device 100 may be implemented with a first body 110 and a second body 120. The processor of the portable device 100 generates, upon detection of separation of the first body 110 from the second body 120, a rescue request signal and transmits the rescue request signal on the beacon signal.

A worker working in the construction site may attach the portable device 100 to the worker's clothes or belongings using a strap 111 connected to the first body 110 of the portable device 100 and may also wear the portable device 100 like a necklace. The first body 110 has a protrusion (not shown) formed thereon so as to be fastened to an insertion part (not shown) formed on the second body 120 for connection between the first and second bodies 110 and 120 and released from the insertion part for separation between the first and second bodies 110 and 120. The first and second bodies 110 and 120 may also be provided with a magnet or the like, instead of the protrusion and the insertion part, for connection and separation therebetween.

The plurality of electronic device 150 may include a first electronic device 151 and a second electronic device 152 to an n^{th} electronic device 153. A portable device may be registered to each of the plurality of electronic devices 150. For example, the portable device 100 may be registered to the first electronic device 151, a second portable device (not shown) may be registered to the second electronic device 152, and the n^{th} portable device (not shown) may be registered to the n^{th} electronic device 153. Here, the electronic devices 150 may be devices, such a smart phone or a tablet personal computer (PC), carried by workers in the construction site and perform communication with the management apparatus 200 by means of construction site safety management application installed therein.

The electronic device 150 includes a processor (not shown), and the processor of the electronic device 150 transmits, when a beacon signal is received from the portable device 100 located within a distance where beacon communication is possible, a rescue request signal included in the beacon signal to the management apparatus 200. Here, the electronic device 150 activates a barometric pressure sensor (not shown) and a global positioning system (GPS) provided in the electronic device 150, and transmits the rescue request signal including the sensing data obtained from each sensor to the management apparatus 200. The sensing data may include atmospheric pressure data obtained from the barometric pressure sensor for use in checking the altitude of the location where the electronic device 150 is located and location data obtained from a position tracking sensor for use in checking the position where the electronic device 150 is located. To this end, the electronic device 150 may perform wireless communication such as 5^{th} generation (5G), long term evolution-advanced (LTE-A), long term evolution (LTE), and wireless fidelity (Wi-Fi) with the portable device such as a smartphone and a tablet PC and may have an application installed for communication with the management apparatus 200.

In more detail, the first electronic device 151 is an electronic device to which the portable device 100 is registered and activates, when a rescue request signal is received from the portable device 100, the air pressure sensor and the position tracking sensor of the first electronic device 151 to obtain sensing data related to the position of the first electronic device 151. Next, the first electronic device 151 activates at least one of a camera (not shown) and a microphone (not shown) provided in the first electronic device 151 to acquire environmental data on the external environment. The first electronic device 151 transmits the rescue request signal including the acquired sensing data and environmental data to the management apparatus 200. The first electronic device 151 also checks the battery level of the registered portable device 100 in real time or periodically and transmits it to the management apparatus 200.

The first electronic device 151 also receives and displays a notice message from the management apparatus 200 through the application. The notice message includes general notice and emergency notice. The general notice may be a notice about the work schedule of the worker who uses the first electronic device 151, and the emergency notice may be a notice about an event such as an accident or disaster occurring at a specific location in the construction site.

In addition, the second electronic device 152 to the n^{th} electronic device 153 to which the portable device 100 is not registered activate, when receiving the rescue request signal from the portable device 100 within a distance capable of beacon communication with the portable device 100, the barometric pressure sensors and position tracking sensors of the second electronic device 152 to the n^{th} electronic device 153 to obtain sensing data related to the position of each electronic device.

The second electronic device 152 to the n^{th} electronic device 153 also transmit the rescue request signal including the acquired sensing data to the management apparatus 200. The second electronic device 152 to the n^{th} electronic device 153 may also activate, when receiving a rescue request signal, at least one of the camera (not shown) and the microphone (not shown) of each electronic device, according to the setting of the management apparatus 200, to acquire environmental data on external environment and transmit the acquired environmental data to the management apparatus 200.

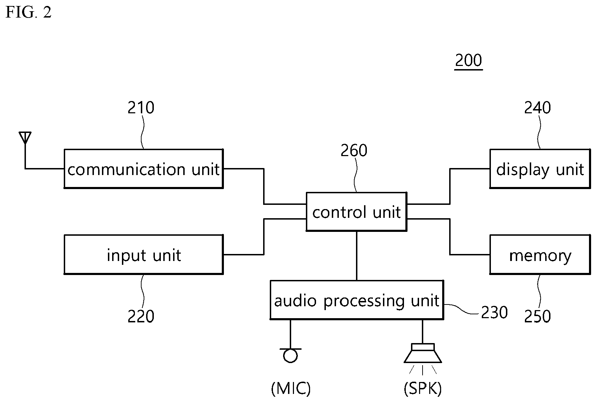

The management apparatus 200 checks the current location of the first electronic device 151 to which the portable device 100 is registered based on the rescue request signal received from the electronic device 150 and displays the current location on the map data of the site. The main configuration of the management apparatus 200 will be described in more detail with reference to FIG. 2 herein below. FIG. 2 is a diagram illustrating a construction site safety management apparatus according to an embodiment of the present invention;

With reference to FIG. 2, the management apparatus 200 according to the present invention may include a communication unit 210 , an input unit 220, an audio processing unit 230, a display unit 240, a memory 250, and a control unit 260 . Although not shown, the system 10 according to the present invention may include a server. The server may store sensing data received from the electronic devices 150 and transmit sensing data to the management apparatus 200 when necessary.

The communication unit 210 communicates with the electronic devices 150 carried by workers working in the construction site. To this end, the communication unit 210 may perform wireless communication including 5^{th} generation (5G), long term evolution-advanced (LTE-A), long term evolution (LTE), wireless fidelity (Wi-Fi), and the like. In addition, when the system 10 according to the present invention includes a server, the communication unit 210 may perform wired (WAN) communication for communication with the server.

The input unit 220 generates input data in response to an input of a manager of the management apparatus 200. The input unit 220 includes input means such as a keyboard, a keypad, a dome switch, a touch panel, a touch key, a mouse, a menu button, etc.

The audio processing unit 230 processes an audio signal. In this case, the audio processing unit 230 includes a speaker SPK and a microphone MIC. The audio processing unit 230 reproduces the audio signal output from the control unit 260 through a speaker, and the audio processing unit 230 transmits the audio signal generated from the microphone to the control unit 260.

The display unit 240 may display data according to the operation of the management apparatus 200. The display unit 240 may include a liquid crystal display (LCD), a light emitting diode (LED) display, an organic light emitting diode (OLED) display, a micro electromechanical systems (MEMS) display, and electronic paper display. The display unit 240 may be combined with the input unit 220 to be implemented as a touchscreen.

The memory 250 stores operation programs of the management apparatus 200 . The memory 250 maps and stores a unique number of the portable device 100; a unique number of the first electronic device 151 to which the portable device 100 is registered; and a name, age, gender, blood type, employee number, phone number, personal information, medical history, working status, etc. of a worker carrying the portable device 100. The memory 250 may store the time at which the rescue request signal transmitted from the portable device 100 is received through the first electronic device 151, the location of the first electronic device 151 identified at the first electronic device 151 when the rescue request signal is received, etc.

The control unit 260 executes a web page for managing site safety or installs a program for managing site safety. The control unit 260 also provides the electronic device 150 with an application capable of interworking with one of the web page or the program (hereinafter, referred collectively to as program) for managing site safety.

The control unit 260 executes the corresponding program according to the input of the manager and checks site information on the construction site that the manager intends to manage. Here, the site information may include manager information, a site open time, a site close time, and the like. Next, the control unit 260 sets a reference altitude by checking the atmospheric pressure at the location where the management apparatus 200 is installed. The reference altitude may be set in order to confirm the altitude of the location where the first electronic device 151 to which the portable device 100 is registered is located when the portable device 100 receives the rescue request signal.

The control unit 260 registers workers working in the construction site to the program. To this end, the control unit 260 maps and stores the electronic device carried by the worker and the portable device registered in the electronic device with the worker information. For example, an on-site manager distributes the portable device 100 to workers and maps a unique number of the portable device 100 to worker information. The worker registers the portable device 100 to the first electronic device 151 carried by the worker. In this manner, the control unit 260 may map the worker information and information on the portable device 100 and the first electronic device 151 to register as worker information.

The control unit 260 displays the map data for the site on the display unit 240 when the administrator completes logging into the program. When a work start signal is received from the registered first electronic device 151, the control unit 260 starts recording the work record of the worker having the first electronic device 151 . Here, the control unit 260 displays the map data along with the number of workers currently working at the site, the number of workers who have failed or disconnected from the portable device, the number of times a rescue request signal has been received at the site, a list of workers, etc.

The control unit 260 transmits notifications for general notices and emergency notices to the first electronic device 151 to the n^{th} electronic device 153 according to an input of the manager. The general notice may be a notice about the work schedules of the workers who use the first electronic device 151 to the n^{th} electronic device 153, and the emergency notice may be a notice about an event such as an accident or disaster occurring at a specific location in the construction site.

The control unit 260 may also check the current location of the workers working in the construction site by checking the location of the electronic device 150 located in the construction site in real time or periodically. The control unit 260 may check, when a specific worker is selected by means of the input unit 220, the current location of the first electronic device 151 to which the portable device 100 carried by the selected worker is registered and transmit, when the identified current location is an area hazardous or where an event has occurred, a warning message to the first electronic device 151. The control unit 260 may check the working status of at least one worker according to an input of the manager, draw up a report on the working status, and display it on the display unit 240 .

The control unit 260 also receives the battery level of the portable device registered to each electronic device periodically or in real time from the first electronic device 151 to the n^{th} electronic device 153. The control unit 260 may transmit a notification message to the electronic device of a worker having a portable device whose battery level has fallen below a threshold value.

The control unit 260 outputs, when a rescue request signal is received from at least one of the plurality of electronic devices 150, an alarm by means of at least one of the display unit 240 and the speaker in response to the rescue request signal. The control unit 260 may transmit a message related to a rescue request signal to a pre-stored contact such as a mobile phone of the manager while outputting the alarm.

The control unit 260 checks the location of the first electronic device 151 to which the portable device 100 is registered through analysis of the sensing data included in the rescue request signal, and displays the identified location on the map data. Here, the control unit 260 compares the barometric pressure value used as a reference when setting the reference altitude with the atmospheric pressure data included in the sensing data to identify the altitude of the first electronic device 151. The control unit 260 reflects the identified altitude in the map data and then displays it. Here, the control unit 260 may display the location of the first electronic device 151 that transmits the rescue request signal in an elevation of the construction site or the like and may check the on-site floor based on the identified altitude to display the location of the first electronic device 151 that transmits the rescue request signal in the form of a text.

The control unit 260 may display the location of the first electronic device 151 in map data, and may continuously track information on the worker having the portable device 100, manager information of the corresponding site, and the portable device 100 and display these information on a commercialized map (e.g., Google Map, Naver Map, etc.). The control unit 260 may also check the movement path of the first electronic device 151 before transmitting the rescue request signal and provide a report on the movement path. The control unit 260 also identifies an electronic device located within a threshold distance based on the identified location of the first electronic device 151. For example, the control unit 260 transmits, when the electronic device located within the threshold distance from the first electronic device 151 is the second electronic device 152, the location of the first electronic device 151 and an alarm notification for the rescue request signal to the second electronic device 152.

The control unit 260 displays detailed information related to the portable device 100 that has transmitted the rescue request signal on the display unit 240. Here, the detailed information may be environmental data acquired at the first electronic device 151 at a time when the first electronic device 151 receives the rescue request signal transmitted from the portable device 100. The control unit 260 downloads the environmental data received from the first electronic device 151 and displays it on the display unit 240. Here, the environmental data may include at least one of moving picture data and sound data acquired at the first electronic device 151 .

In this manner, the manager of the management apparatus 200 may establish a more appropriate rescue strategy by specifically checking the current location status of the first electronic device 151 registered with the portable device 100 transmitting the rescue request signal, thereby minimizing human injury and property damage. Although the description is made only with an exemplary embodiment where one portable device 100 is involved, the present invention is not limited thereto, and a plurality of portable devices may each be registered to the electronic device and operate.

Although the description is made with an exemplary embodiment where the electronic device 150 is provided with a pressure sensor and a position tracking sensor, the pressure sensor and the position tracking sensor may be provided in the portable device 100. In the case where the barometric pressure sensor and the position tracking sensor are provided in the portable device 100, the portable device 100 may transmit the rescue request signal including the sensing data obtained from each sensor to the electronic device 150 .

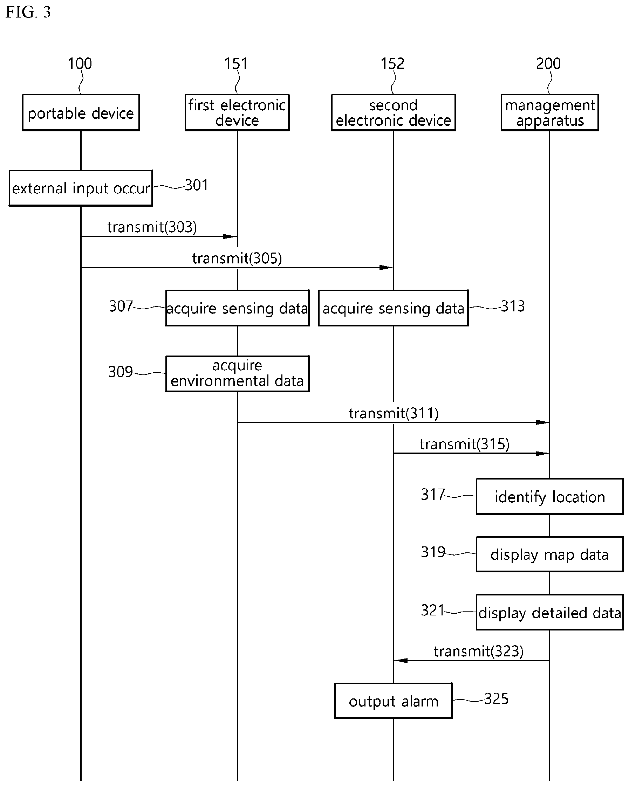

FIG. 3 is signal flow diagram illustrating a construction site safety management method according to an embodiment of the present invention.

With reference to FIG. 3, upon detecting an external input at step 301, the portable device 100 generates and transmits a rescue request signal. Here, the external input means that the first body 110 of the portable device 100 is separated from the second body 120. The rescue request signal transmitted from the portable device 100 at steps 303 and 305 may be received by the first and second electronic devices 151 and 152 located within a distance capable of beacon communication with the portable device 100. Although the description is made with the exemplary embodiment where the rescue request signal is transmitted to the first and second electronic devices 151 and 152 for convenience of explanation, the present invention is not limited thereto. In more detail, the portable device 100 may transmit a rescue request signal through beacon communication, and a plurality of electronic devices 150 located within a beacon communication range may receive the rescue request signal.

At step 307, the first electronic device 151, as an electronic device to which the portable device 100 is registered, activates the position tracking sensor and the barometric pressure sensor provided in the first electronic device 151 to obtain sensing data when receiving the rescue request signal. Here, the sensing data includes position data and atmospheric pressure data respectively obtained by the position tracking sensor and the barometric pressure sensor. At step 309, the first electronic device 151 activates at least one of a camera (not shown) and a microphone (not shown) provided in the first electronic device 151. The first electronic device 151 acquires environmental data including at least one of video data and sound data, using the activated camera and microphone, at the time when the rescue request signal is received. At step 311, the first electronic device 151 transmits the rescue request signal including the sensing data and the environmental data to the management apparatus 200.

At step 313, the second electronic device 152, although the portable device 100 is not registered to the second electronic device 152, activates the position tracking sensor and the barometric pressure sensor provided in the second electronic device 152 upon receipt the rescue request signal. At step 315, the second electronic device 152 transmits the rescue request signal including the acquired sensing data to the management apparatus 200. Here, the second electronic device 152 may transmit the environmental data, according to the setting of the management apparatus 200, acquired by activating at least one of the camera (not shown) and the microphone (not shown) provided in the second electronic device 152, when receiving the rescue request signal, to the management apparatus 200.

At step 317, the management apparatus 200 determines the position of the worker having the first electronic device 151 based on the rescue request signal received from the first electronic device 151 (hereinafter, referred to as the location of the first electronic device 151). In more detail, the management apparatus 200 may check the location of the first electronic device 151 based on the location data and may check the altitude of the first electronic device 151 based on the atmospheric pressure data. To this end, the management apparatus 200 sets a reference altitude. The reference altitude may be set by measuring the atmospheric pressure at the location where the management apparatus 200 is installed, and the altitude of the first electronic device 151 may be identified by comparing the atmospheric pressure at the installation location of the management apparatus 200 with the atmospheric pressure data obtained from the first electronic device 151.

Although receiving the rescue request signal including the sensed data from the second electronic device 152, the management apparatus 200 ignores, it is normally communicating with the first electronic device 151, the rescue request signal received from the second electronic device 152. However, when the management apparatus 200 is not normally communicating with the first electronic device 151, it may roughly identify the location of the first electronic device 151 based on the sensing data included in the rescue request signal received from the second electronic device 152. In more detail, the management apparatus 200 may identify, on the basis that the second electronic device 152 has received the rescue request signal transmitted by the portable device 100, that the worker carrying the portable device 100 is located within a distance where the portable device 100 is capable of beacon communication with the second electronic device 152.

The management apparatus 200 displays, at step 319, the location of the first electronic device 151 on the map data of the construction site based on the identified location and altitude of the first electronic device 151 and then performs the operation of step 321 . At step 321, the management apparatus 200 displays detailed information related to the first electronic device 151 according to an input of a manager who manages the management apparatus 200 . Next, the management apparatus 200 may identify that the electronic device located within the threshold distance is the second electronic device 152 based on the identified location of the first electronic device 151 and the identified second electronic device and may transmit, at step 323, to the second electronic device 152 a message informing that the worker carrying the portable device 100 has requested rescue. To this end, the management apparatus 200 may identify the location of the second electronic device 152 through an application installed in the second electronic device 152 . At step 325, the second electronic device 152 outputs an alarm based on the received message.

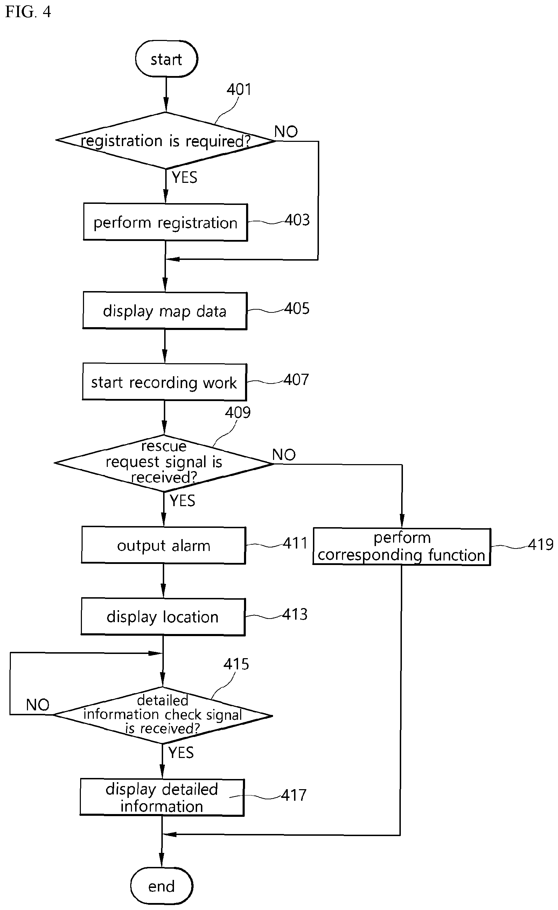

FIG. 4 is a flowchart illustrating a method for performing construction site management in a management apparatus according to an embodiment of the present invention.

With reference to FIG. 4, the control unit 260 determines at step 401 whether registration of the portable device 100 and the first electronic device 151 is required. The control unit 260 performs, if it is determined at step 401 that registration is required, the registration at step 403 and performs, if the registration is completed, the operation of step 405. In more detail, the control unit 260 transmits to the first electronic device 151 an installation link through which an application provided by the management apparatus 200 can be installed in the first electronic device 151 .

The worker using the first electronic device 151 in which the application is installed inputs site information and worker information through the application and performs registration with the portable device 100 . The first electronic device 151 transmits the unique number of the registered portable device 100 to the management apparatus 200 to complete the registration. In the manner, the worker registers the information of the first electronic device 151 in use by the worker and the information of the portable device 100 registered in the first electronic device 151 to the management apparatus 200 .

Next, the control unit 260 displays at step 405 the map data of the construction site on the display unit 240 and then performs the operation of step 407. At step 407, the control unit 260 starts recording work of the worker having the portable device 100 . Here, the control unit 260 displays the map data along with the number of workers currently working at the site, the number of workers not accounted for with the management apparatus 200 due to the failure or disconnection between the portable device and the electronic device, the number of times a rescue request signal has been received at the site, a list of workers, etc. In this manner, the manager of the management apparatus 200 may check the working situation of the worker working in the site and the construction situation.

The control unit 260 performs the operation of step 411 if it is determined at step 409 that a rescue request signal is received from at least one of the plurality of electronic devices 150 and performs the operation of step 419 if no rescue request signal is received. The control unit 260 outputs, at step 411, an alarm through at least one of the display unit 240 and the speaker when receiving the rescue request signal and performs the operation of step 413. Here, the control unit 260 may transmit a message related to the rescue request signal to a pre-stored contact such as a mobile phone of the manager.

At step 413, the control unit 260 checks the location of the first electronic device 151 to which the portable device 100 is registered through analysis of the sensing data included in the rescue request signal, and displays the identified location on the map data. Here, the control unit 260 compares the barometric pressure value used as a reference when setting the reference altitude with the barometric pressure data included in the sensing data to identify the altitude of the first electronic device 151.

The control unit 260 reflects the identified altitude in the map data and then displays it. Here, the control unit 260 may display the location of the first electronic device 151 that receives the rescue request signal in an elevation of the construction site or the like and may check the on-site floor based on the identified altitude to display the location of the first electronic device 151 in the form of a text. The control unit 260 may display the location of the first electronic device 151 on map data and may continuously track information on the worker having the portable device 151, manager information of the corresponding site, and the portable device 151 and display these information on a commercialized map (e.g., Google Map, Naver Map, etc.).

The control unit 260 may also check the movement path of the first electronic device 151 before transmitting the rescue request signal and provide a report on the movement path. The control unit 260 also identifies an electronic device located within a threshold distance based on the identified location of the first electronic device 151. For example, the control unit 260 transmits, when the electronic device located within the threshold distance from the first electronic device 151 is the second electronic device 152, the location of the first electronic device 151 and an alarm notification to the second electronic device 152. In this manner, another worker working near the worker having the first electronic device 151 can rescue the worker having the first electronic device 151 more quickly.

If it is determined at step 415 that an identification signal for identifying detailed information related to the portable device 100 is received, the control unit 260 performs the operation of step 417 . At step 417, the control unit 260 may download and display the environmental data obtained from the first electronic device 151 to which the portable device 100 is registered. To this end, the first electronic device 151 activates at least one of a camera and a microphone provided in the first electronic device 151 to acquire the environmental data, when receiving the rescue request signal, from the portable device 100 and transmits the obtained environmental data to the management device 200.

At step 419, the control unit 260 performs a corresponding function. Here, the corresponding function includes a function for the manager to manage the construction site and workers using the management apparatus 200. In more detail, the control unit 260 transmits notifications for general notices and emergency notices to the first electronic device 151 to the n^{th} electronic device 153 according to an input of the manager. The general notice may be a notice about the work schedules of the workers who use the first electronic device 151 to the n^{th} electronic device 153, and the emergency notice may be a notice about an event such as an accident or disaster occurring at a specific location in the construction site.

The control unit 260 may also check the current location of at least one of the workers working in the construction site and may transmit, if the current location of the worker is an area hazardous or where an event occurs, a warning message to the electronic device of the worker entered the area. The control unit 260 may check the working status of at least one worker according to an input of the manager, draw up a report on the working status, and display it on the display unit 240.

The control unit 260 also receives the battery level of the portable device registered to each electronic device periodically or in real time from the first electronic device 151 to the n^{th} electronic device 153. The control unit 260 may transmit a notification message to the electronic device of a worker having a portable device whose battery level has fallen below a threshold value.

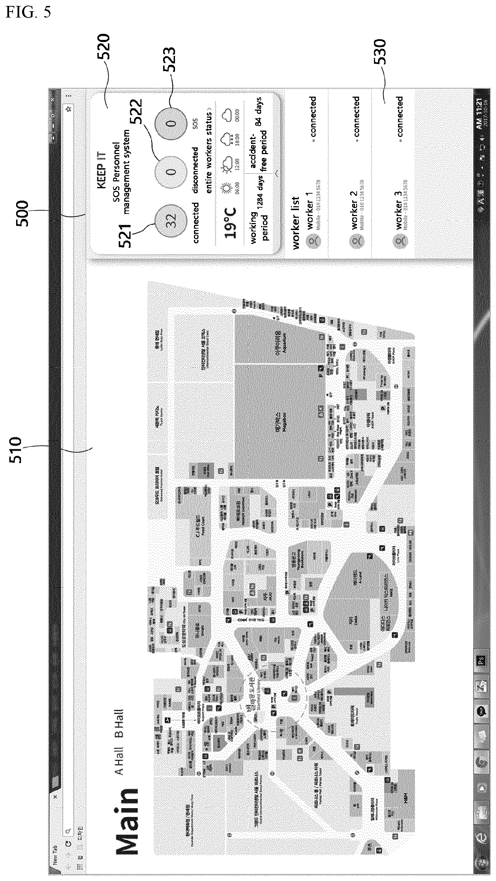

FIGS. 5 to 8 are diagrams illustrating exemplary screen displays of a management apparatus according to an embodiment of the present invention.

With reference to FIGS. 5 to 8, the control unit 260 displays the main screen 500 as shown in FIG. 5 on the display unit 240 when the manager is authenticated based on the ID and password received from the input unit 220. The main screen 500 may be implemented to have a first area 510 displaying map data, a second area 520 displaying site information, and a third area 530 displaying worker information.

The first area 510 may display map data of the site, and although a plan view is illustrated in an embodiment of the present invention, an elevation view of the site may be displayed along with a plan view to display the position of the portable device 100 more accurately when a rescue request signal occurs. The second area 520 is implemented to have buttons 521, 522, and 523 for respectively displaying the number of workers input a work start signal through an application, the number of workers whose connection with the portable device is not identified after input of the work start signal, and the number of times the rescue request signal is generated. Here, the control unit 260 displays, when one of the buttons 521, 522, and 523 is selected by means of the input unit 220, detailed data of the data displayed on the corresponding button in the third area 530. For example, the control unit 260 displays, when the first button 521 is selected by means of the input unit 220, a list of currently connected workers in the third area 530.

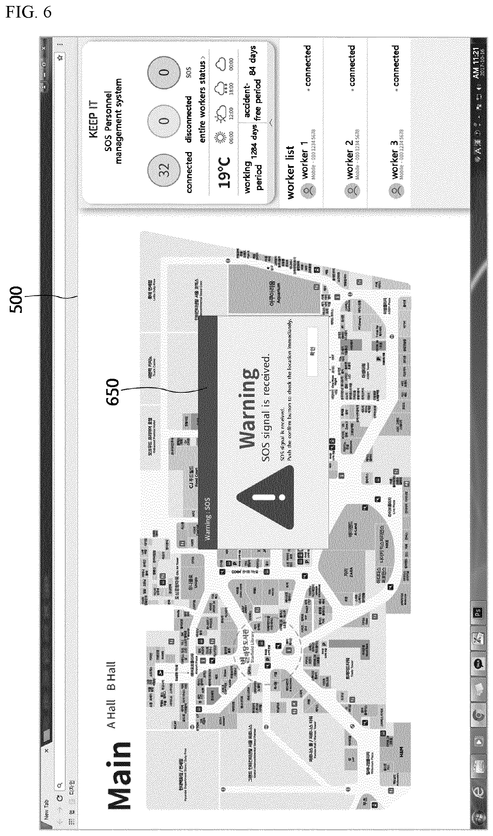

The control unit 260 displays, when a rescue request signal is received from the electronic device 150 while displaying the main screen 500 as shown in FIG. 5, a message window 650 notifying that the rescue request signal is received on the main screen 500 as shown in FIG. 6. In more detail, when a worker using the first electronic device 151 and the registered portable device 100 separates the first body 110 and the second body 120 of the portable device 100, the portable device 100 generates and transmits a rescue request signal.

When the electronic device, for example, the first and second electronic devices 151 and 152, located within a range capable of receiving the rescue request signal transmitted from the portable device 100 receives the rescue request signal, the first electronic device 151 activates the barometric pressure sensor and the position tracking sensor provided in the first electronic device 151 to acquire sensing data for the location of the first electronic device 151. The first electronic device 151 also acquires environmental data around the first electronic device 151 by activating at least one of the camera and the microphone provided in the first electronic device 151. The first electronic device 151 transmits the rescue request signal including the sensing data and the environmental data to the management device 200.

In addition, the second electronic device 152 that, although the portable device 100 is not registered thereto, receives the rescue request signal from the portable device 100 activates the barometric pressure sensor and the position tracking sensor provided in the second electronic device 152 to acquire the sensing data for the location of the second electronic device 152 and transmits the rescue request signal including the sensing data to the management apparatus 200.

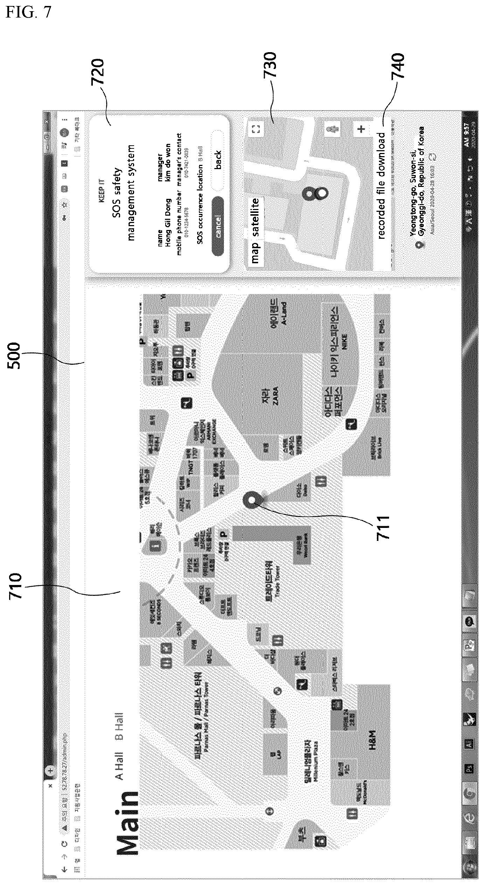

When receiving the rescue request signal, the control unit 260 displays the message window 650. The control unit 260 moves and magnifies, upon detection of an input made by means of the check button implemented in the message window 650, the map data shown in the first area 710 to display the current location 711 of the first electronic device 151 as shown in FIG. 7. In addition, the second area 720 displays the information on the worker having the first electronic device 151, information on the manager of the site, and the location of the occurrence; and the third area 730 displays a commercialized map (e.g., Google and Naver map) on which the location of the first electronic device 151 is tracked and marked.

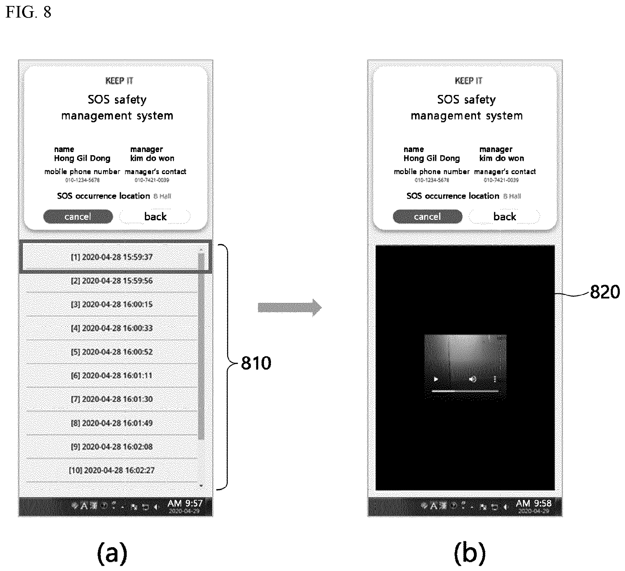

The control unit 260 displays, when an input is made to the recorded file download button 740, a list 810 of recorded files as shown in part (a) of FIG. 8. The control unit 260 plays, when any item is selected from the corresponding list 810, the recorded file corresponding to the selected item as shown in part (b) of FIG. 8. Here, the recorded file may be moving picture data or sound data including only recoded sound without an image.

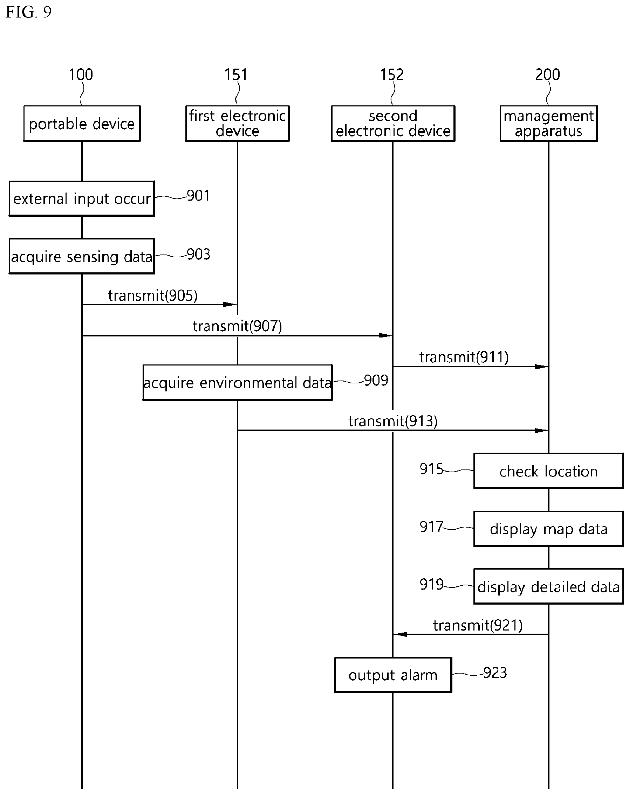

FIG. 9 is signal flow diagram illustrating a construction site safety management method according to another embodiment of the present invention.

With reference to FIG. 9, upon detection of an external input at step 901, the portable device 100 acquires sensing data at step 903. Here, the sensing data includes position data and atmospheric pressure data respectively obtained by the position tracking sensor and the barometric pressure sensor provided in the portable device 100. At steps 905 and 907, the portable device 100 transmits a rescue request signal generated according to the external input. Here, the portable device 100 transmits the rescue request signal including the sensing data. Although the description is made with the exemplary embodiment where the rescue request signal is transmitted to the first and second electronic devices 151 and 152 for convenience of explanation, the present invention is not limited thereto. In more detail, the portable device 100 may transmit a rescue request signal through beacon communication, and a plurality of electronic devices 150 located within a beacon communication range may receive the rescue request signal.

At step 909, the first electronic device 151, a the electronic device to which the portable device 100 is registered, activates at least one of a camera (not shown) and a microphone (not shown) provided in the first electronic device 151. The first electronic device 151 acquires environmental data including at least one of video data and sound data, using the activated camera and microphone, at the time when the rescue request signal is received.

At step 911, the second electronic device 152 transmits the rescue request signal to the management apparatus 200. Here, the second electronic device 152 may transmit the rescue request signal including no additional environmental data to the management apparatus 200 because the portable device 100 is not a registered to the second electronic device 152. Here, the second electronic device 152 may transmit to the management apparatus 200 the environmental data, according to the setting of the management apparatus 200, acquired by activating, when receiving the rescue request signal, at least one of the camera (not shown) and the microphone (not show) provided in the second electronic device 152. At step 913, the first electronic device 151 transmits the rescue request signal and the environmental data to the management apparatus 200.

At step 915, the management device 200 checks the location of the portable device 100 based on the rescue request signal received from the first electronic device 151 and the second electronic device 152. In more detail, the management apparatus 200 may check the location of the portable device 100 based on the location data and may check the altitude of the portable device 100 based on the atmospheric pressure data. To this end, the management apparatus 200 sets a reference altitude. The reference altitude may be set by measuring the atmospheric pressure at the location where the management apparatus 200 is installed, and the altitude of the portable device 100 may be identified by comparing the atmospheric pressure at the installation location of the management apparatus 200 with the atmospheric pressure of the portable device 100.

The management apparatus 200 displays, at step 917, the location of the first electronic device 100 on the map data of the construction site based on the identified location and altitude of the portable device 100 and then performs the operation of step 919 . At step 919, the management apparatus 200 displays detailed information related to the portable device 100 according to an input of a manager who manages the management apparatus 200. Next, the management apparatus 200 identifies that the electronic device located within the threshold distance is the second electronic device 152 based on the identified location of the portable device 100 and transmit, at step 921, to the identified second electronic device 152 a message informing that the worker carrying the portable device 100 has requested rescue. To this end, the management apparatus 200 may identify the location of the second electronic device 152 through an application installed in the second electronic device 152 . At step 923, the second electronic device 152 outputs an alarm based on the received message.

The embodiments of the present invention disclosed in the present specification and drawings are merely provided as specific examples for convenience of explanation of the technical contents of the present invention and help understanding the present invention and are not intended to limit the scope of the present invention. Thus, the scope of the present invention should be construed as including all changes or modifications derived based on the technical spirit of the present invention in addition to the embodiments disclosed herein.

## Claims

1. Site safety management system comprising:
a portable device comprising a first body and a second body attachable to and detachable from the first body;
at least one electronic device receiving a rescue request signal transmitted, when the first and second bodies are detached from each other, by the portable device; and
a management apparatus identifying a current location including an altitude based on the rescue request signal received from the at least one electronic device and displaying the current location on map data of a site.

2. The system of claim 1, wherein the at least one electronic device comprises a barometric pressure sensor acquiring atmospheric pressure data related to the altitude of the current location and a position tracking sensor acquiring location data related to the current location.

3. The system of claim 2, wherein a first electronic device among the at least one electronic device activates, when receiving the rescue request signal, at least one of a camera and a microphone provided in the first electronic device to acquire environmental data.

4. The system of claim 3, wherein at least one second electronic devices except the first electronic device to which the portable device is registered to among the at least one electronic device activates, when receiving the rescue request signal, at least one of a camera and a microphone provided in the second electronic device to acquire environmental data.

5. The system of claim 4, wherein the management apparatus outputs, when receiving the rescue request signal from the at least one electronic device, an alarm and transmits the rescue request signal to a prestored contact.

6. The system of claim 5, wherein the management apparatus downloads the environmental data received from the first electronic device and outputs the environmental data.

7. The system of claim 1, wherein the management apparatus transmits a message related to the rescue request signal to the at least one electronic device located within a critical radius based on the current location.

8. The system of claim 1, wherein the portable device comprises a barometric pressure sensor acquiring atmospheric pressure data related to the altitude of the current location and a position tracking sensor acquiring location data related to the current location.

9. Site safety management apparatus comprising:
a communication unit communicating with at least one electronic device receiving a rescue request signal transmitted by a portable device that transmits the rescue request signal when a first body and a second body of the portable device are detached from each other;
a control unit identifying current location including an altitude based on communication with the at least one electronic device; and
a display unit displaying the identified current location on map data of a site.

10. The apparatus of claim 9, wherein the control unit identifies the current location based on atmospheric pressure data related to the altitude of the current location and location data related to the current location that are respectively acquired from a barometric pressure sensor and a position tracking sensor provided in the at least one electronic device.

11. The apparatus of claim 10, wherein the control unit receives and identifies, when receiving the rescue request signal from the first electronic device to which the portable device is registered, environmental data acquired from at least one of a camera and a microphone provided in the first electronic device.

12. The apparatus of claim 11, wherein the control unit receives and identifies, when receiving the rescue request signal from at least one second electronic device except the first electronic device, the environmental data acquired at the second electronic device.

13. The apparatus of claim 10, wherein the control unit transmits, when receiving the rescue request signal, the rescue request signal to a prestored contact.

14. The apparatus of claim 10, wherein the control unit transmits a message related to the rescue request signal to the at least one electronic device located within a critical radius based on the current location.

15. The apparatus of claim 9, wherein the control unit identifies the current location based on atmospheric pressure data related to the altitude of the current location and location data related to the current location that are respectively acquired from a barometric pressure sensor and a position tracking sensor provided in the portable device.
